# EUROPÄISCHE PATENTANMELDUNG

(11) **EP 1 705 143 A1**
(43) Veröffentlichungstag der Anmeldung: **27.09.2006**
(21) Anmeldenummer: 06100428.9
(22) Anmeldetag: 17.01.2006
(51) Int. Cl.: B65H 23/025, B65H 27/00

(54) **Walze**

(30) Priorität: 22.03.2005 DE 102005013782
(71) Anmelder: Voith Patent GmbH, 89522 Heidenheim (DE)
(72) Erfinder: Gruber-Nadlinger, Thomas, 3442 Langenrohr (AT); Bader, Benno, Dr., 2620 Mollram (AT); Gamsjäger, Norbert, Dr., 2721 Bad Fischau (AT); Gobec, Georg, Dr. Mag., 2700 Wr. Neustadt (AT); Schrefl, Herbert, 3100 St. Pölten (AT)
(74) Vertreter: Kunze, Klaus

(57) **Zusammenfassung**

2.1 Es sind Breitstreckwalzen mit einem inneren, geraden Stützelement und einem äußeren, drehbaren Mantel bekannt, bei denen der äußere Mantel über Bürsten auf dem inneren Stützelement gelagert ist. Die neue Breitstreckwalze soll eine verbesserte Breitstreckwirkung haben.
2.2 Das Stützelement (2) weist auf seiner zum Mantel (3) gerichteten Außenseite (4) eine Lagereinrichtung (5) zum radialen Abstützen des äußeren Mantels (3) auf. Erfindungsgemäß ist die Lagereinrichtung (5) in radialer Richtung der Walze (1) steif ausgebildet.
2.3 Steuerung des Dehnverhaltens einer Breitstreckwalze.

## Beschreibung

Die Erfindung bezieht sich auf eine Breitstreckwalze nach dem Oberbegriff des Patentanspruchs 1.

Eine solche Breitstreckwalze ist aus der US-A-4 862 565 bekannt. Bei dieser Breitstreckwalze hat das innere Stützelement auf seiner zum äußeren Mantel gerichteten Außenseite eine Lagereinrichtung, welche in Form von in radialer Richtung abstehenden Bürstenborsten ausgebildet ist. Diese sind bei einem von außen nach innen gerichteten Druck nachgiebig, so dass der äußere Mantel nicht unter allen Betriebsbedingungen konstant auf seinem Innendurchmesser gehalten werden kann. Ferner ist eine derartige Breitstreckwalze nicht für höhere Rotationsgeschwindigkeiten (Bahngeschwindigkeiten) geeignet, da die Fliehkräfte ein Abheben des weichen Mantels bzw. einzelner Mantelsegmente ermöglichen oder die Festigkeit der Konstruktion zu gering ist, um beispielsweise in der Pressenpartie einer Papiermaschine hohe Papierbahnzüge oder Siebzüge, allgemein Bahnzüge realisieren zu können.

Ferner sind Breitstreckwalzen bekannt, welche bananenförmig, d.h. mit gebogenem Mantel ausgebildet sind. Dieser Aufbau hat den Nachteil, dass durch die Krümmung der Walze auch der Bahnzug im Verlauf der Bahnbreite verändert wird. Dadurch wird die Papierbahn unterschiedlich gespannt und verzerrt. Außerdem können sich mit der veränderten Bahnspannung die Anpresskräfte der Bahn, wie z.B. einer Papierbahn, auf die Walze und somit die Reibungsverhältnisse ändern, wodurch es vor allem im Randbereich der Walze zum Verlust der Papierbahnhaftung kommen kann. Das dadurch ermöglichte Quergleiten der Papierbahn kann zu einer starken Verringerung des Breitstreckeffektes führen.

Der Erfindung liegt die Aufgabe zugrunde, eine Breitstreckwalze der eingangs erwähnten Art zu schaffen, deren Breitstreckwirkung verbessert ist.

Diese Aufgabe wird erfindungsgemäß durch eine Breitstreckwalze mit den Merkmalen des Patentanspruchs 1 gelöst.

Vorteilhafte Weiterbildungen sind Gegenstand der Unteransprüche.

Das innere Stützelement weist auf seiner zum Mantel gerichteten Außenseite eine Lagereinrichtung zum radialen Abstützen des äußeren Mantels auf. Erfindungsgemäß ist die Lagereinrichtung in radialer Richtung der Walze steif ausgebildet. Dadurch ist der äußere Mantel auch bei erhöhten, von außen nach innen in radialer Richtung wirkenden Andruck- oder Presskräften sicher an seinem Platz so gehalten, dass der Innendurchmesser des Mantels konstant bleibt. Durch die Abstützung des äußeren Mantels auf dem inneren, vorzugsweise geraden Stützelement, ist eine gravierende Veränderung der Spannung der Papierbahn weitgehend ausgeschlossen.

Vorteilhafterweise ist die Lagereinrichtung eine statische oder dynamische Gleitlagerung oder eine Kugel- oder Rollenlagerung. Eine derartige Lagereinrichtung ist vergleichsweise reibungs- und wartungsarm, was sich vorteilhaft auf den Verschleiß der damit in Zusammenhang stehenden Teile und die Lebensdauer der Walze auswirkt.

Gemäß einer anderen Weiterbildung sind der äußere Mantel in radialer Richtung und das innere Stützelement vorzugsweise in axialer und radialer Richtung steif ausgebildet. Damit sind Stützelement und äußerer Mantel für hohe Papierbahngeschwindigkeiten und damit hohe Drehzahlen geeignet. Die Durchbiegung der Breitstreckwalze ist minimiert. Ferner ist eine gute radiale Abstützung des äußeren Mantels gewährleistet. Durch eine derartige Ausbildung des äußeren Mantels kann bei gleichbleibender Querschnittsform eine möglichst große Dehnung bei geringem Kraftaufwand realisierbar sein. Zumindest in der Laufzone der Papierbahn ist der äußere Mantel nicht gekrümmt.

Gemäß einer besonders bevorzugten Ausführungsform der Erfindung ist das Dehnverhalten des äußeren Mantels durch die Wahl seiner Dicke und/oder das Vorsehen, vorzugsweise Orientieren, eines oder mehrerer Materialien, wie Harze, bevorzugt Elastomere, besonders bevorzugt Polyurethan, oder Thermo-, Duroplaste; Härter; Füllstoffe, bevorzugt Siliciumcarbid (SiC), Aluminiumoxid, Thermoplastfüllstoffe, bevorzugt, Polypropylen, Nylon, Polyethylen (allgemein Gebrauchsthermoplaste) Polyetheretherketon (PEEK), Polyvinylidenfluorid (PVDF), Polyvinylfluorid (PVF), Polytetrafluorethylen (PTFE), Polyester (PES), Polyphenylsiloxan (PPS); Verstärkungsfasern aus organischen Fasern, bevorzugt Polyester, Aramid, Carbon, oder anorganischen Fasern, bevorzugt Bor, Glas, metallische Fasern; piezoelektrische Fasern, einstellbar. Damit ist das Dehnungsverhalten des äußeren Mantels längs der Breite der Breitstreckwalze in weiten Bereichen variierbar und an die jeweiligen Anforderungen anpassbar. Es ist damit auch möglich, bestimmte Abschnitte des äußeren Mantels bezüglich ihres Dehnungsverhaltens gezielt einzustellen, insbesondere mit Piezofasern auch adaptive Einstellungsmöglichkeiten erhalten.

Vorteilhafterweise ist der äußere Mantel vorzugsweise in der Mitte seiner Breite gegen ein axiales Verschieben gesichert, besonders bevorzugt am Stützelement fixiert. Damit ist eine Breitstreckung der Papierbahn symmetrisch zur Bahnmitte gewährleistet, d.h. eine einseitige Verschiebung der Papierbahn infolge unsymmetrischer Dehnung verhindert. Durch die Fixierung des äußeren Mantels an dem oder relativ zum inneren Stützelement kann es auch möglich sein, gegebenenfalls das Drehmoment von dem inneren Stützelement auf den äußeren, drehbaren Mantel zu übertragen, sofern dies gewünscht ist.

Wird der äußere Mantel nicht in der Mitte fixiert, ist die Lage der Bahn vom Dehnungsverhalten des Mantels entlang der Breite beziehungsweise vom Verschiebungsweg des Mantels bis zur Separation der Papierbahn (beim Auflaufen symmetrisch) abhängig. Diese Art der Lagerung ist normalerweise ungünstig, kann aber bei gezielter Steuerung auch dazu benützt werden die Spurlage der Bahn (Bahnverlauf) zu regeln.

Gemäß einer anderen Weiterbildung ist der äußere Mantel an seinen Rändern mit einer schräg stehenden Taumel- oder Kurvenscheibe oder einem geneigten und zur Längsachse des inneren Stützelementes versetzten Lager verbunden. Insbesondere bei Verwendung von sogenannten Kurvenscheiben ist es möglich, die Zu-/Abnahme der Streckung des äußeren Mantels über den Drehwinkel variabel zu steuern. Mit Hilfe der geneigten und versetzten Lager erfolgt die Krümmung des äußeren Mantels außerhalb des Laufbereichs der Papierbahn, so dass auch die Manteloberfläche insgesamt eine unterschiedliche Dehnung erfährt.

Gemäß einer vorteilhaften Weiterbildung ist der äußere Mantel über das innere Stützelement oder direkt vorzugsweise mittels eines Fluids antreibbar. Sofern der äußere Mantel überhaupt angetrieben werden soll, ist damit die Art des Antriebs in weiten Grenzen variabel. Bei einem direkten Antrieb kann der Außenmantel über Riemen und Räder angetrieben sein. Bei einem sehr elastischen Material des äußeren Mantels kann ein Antrieb an beiden Mantelenden vorteilhaft sein. Beim direkten Antrieb des äußeren Mantels kann das Drehmoment durch das Strömen von Flüssigkeiten oder Gasen bewirkt werden, welche einen Strömungswiderstand, wie zum Beispiel einen Reibungswiderstand, Stau- oder Druckwiderstand, verursachen und dadurch das Drehmoment bereitstellen. Sofern der äußere Mantel über das innere Stützelement angetrieben werden soll, ist dies auch durch die Wirkung von Magnetfeldern, auch elektrischen Feldern, möglich, so dass der äußere Mantel von dem inneren Stützelement mitgenommen oder gegenüber diesem gedreht wird. Wie zuvor erwähnt, kann das innere Stützelement das Drehmoment auch über eine feste Verbindung in den äußeren Mantel einleiten.

Gemäß einer anderen Weiterbildung der Erfindung sind der äußere Mantel und/oder das innere Stützelement beschichtet. Dadurch können die Eigenschaften des Mantels und des Stützelements positiv beeinflusst werden. So kann die Beschichtung verstärkend und verschleißmindernd wirken. Ebenfalls kann dadurch die thermische und elektrische Leitfähigkeit des Mantels und/oder des Stützelementes modifiziert werden. Die Beschichtungen können zur Erzeugung von abstoßenden Wirkungen (Lotuseffekt) und zur Verbesserung der Verschleißbeständigkeit beitragen.

Ausführungsbeispiele des Erfindungsgegenstandes werden nachfolgend anhand der Zeichnung näher erläutert, wobei alle beschriebenen und/oder bildlich dargestellten Merkmale für sich oder in beliebiger Kombination den Gegenstand der vorliegenden Erfindung unabhängig von ihrer Zusammenfassung in den Ansprüchen oder deren Rückbeziehung bilden. Es zeigen:
- Fig. 1: einen schematischen, teilweisen Längsschnitt durch eine Breitstreck-walze;
- Fig. 2: eine schematische Detailansicht teilweise im Längsschnitt einer Breitstreckwalze gemäß einer anderen Ausführungsform;

- Fig. 3: eine schematische Seitenansicht im Querschnitt gemäß einer weiteren Ausführungsform der Breitstreckwalze; und
- Fig. 4: eine schematische Ansicht der Breitstreckwalze gemäß einer weiteren Ausführungsform in einem teilweisen Längsschnitt.

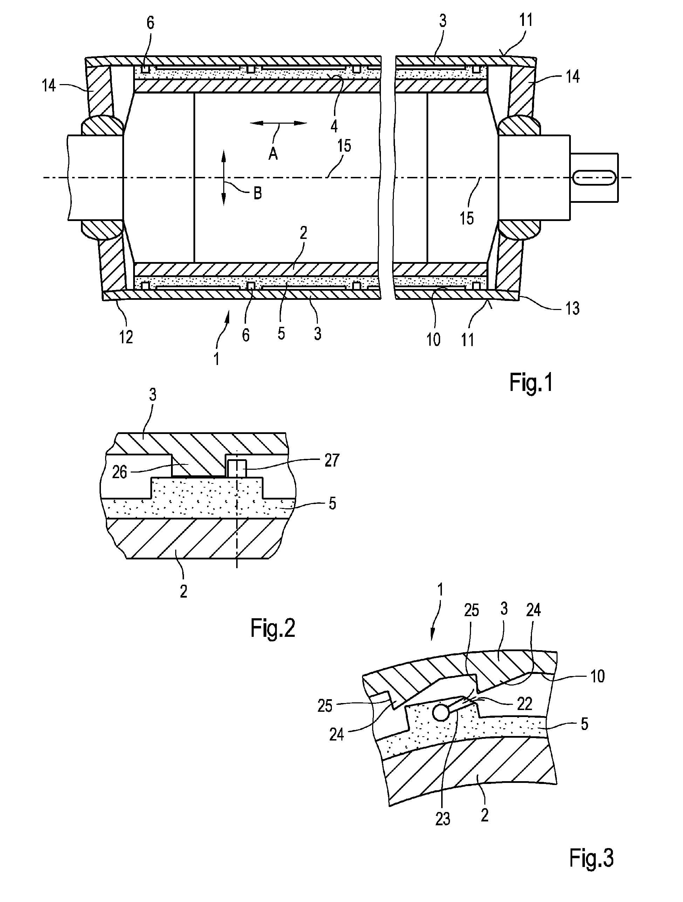

In Fig. 1 ist eine Breitstreckwalze 1 schematisch in einem teilweisen Längsschnitt gemäß einer ersten Ausführungsform gezeigt.

Die Breitstreckwalze 1 hat ein inneres, gerades, zylindrisches Stützelement 2, das in der in Fig. 1 verdeutlichten Ausführungsform rohrartig ausgebildet ist. Ferner hat die Breitstreckwalze 1 einen äußeren, drehbaren Mantel 3, welcher in Richtung seiner Breite (siehe Doppelpfeil A) elastisch dehnbar ist. Das Stützelement 2 hat auf seiner zum äußeren Mantel 3 gerichteten Außenseite 4 eine Lagereinrichtung 5.

Erfindungsgemäß ist die Lagereinrichtung 5 in radialer Richtung (siehe Doppelpfeil B) der Walze 1 steif ausgebildet. Gemäß der in Fig. 1 gezeigten Ausführungsform ist die Lagereinrichtung 5 rohrartig ausgebildet und umgibt die Außenseite 4 des Stützelementes 2 in dessen Umfangsrichtung. Die Lagereinrichtung 5 stützt den äußeren Mantel 3 in radialer Richtung ab. Dazu ist die Lagereinrichtung 5 eine statische oder dynamische Gleitlagerung oder eine Kugel- oder Rollenlagerung. Es ist klar, dass die Lagereinrichtung 5 die Innenwand 10 des äußeren Mantels 3 an zahlreichen Stellen abstützt, wie dies in Fig. 1 lediglich schematisch und stark vereinfacht gezeigt ist. Dazu weist die Lagereinrichtung 5, wie zuvor erwähnt, beispielsweise die Kugel- oder Rollenlagerung 6 auf.

Der äußere Mantel 3 ist in radialer Richtung, d.h. in Richtung des Doppelpfeils B, steif ausgebildet. Ferner ist das innere Stützelement 2 vorzugsweise in axialer Richtung gemäß dem Doppelpfeil A und in radialer Richtung gemäß dem Doppelpfeil B steif ausgebildet. Das innere Stützelement 2 steht still oder ist drehbar gelagert und dient als Träger für den äußeren Mantel 3.

Das Dehnverhalten des äußeren Mantels 3 ist durch die Wahl seiner Dicke und/oder das Vorsehen, vorzugsweise Orientieren, eines oder mehrerer Materialien einstellbar. Diese Materialien sind beispielsweise Harze, bevorzugt Elastomere, besonders bevorzugt Polyurethan, oder Thermo-, Duroplaste; Härter; Füllstoffe, bevorzugt Siliciumcarbid (SiC), Aluminiumoxid, Thermoplastfüllstoffe, bevorzugt, Polypropylen, Nylon, Polyethylen (allgemein Gebrauchsthermoplaste) Polyetheretherketon (PEEK), Polyvinylidenfluorid (PVDF), Polyvinylfluorid (PVF), Polytetrafluorethylen (PTFE), Polyester (PES), Polyphenylsiloxan (PPS); Verstärkungsfasern aus organischen Fasern, bevorzugt Polyester, Aramid, Carbon, oder anorganische Fasern, bevorzugt Bor, Glas, metallische Fasern; piezoelektrische Fasern. Die für den äußeren Mantel 3 zum Einsatz gebrachten Materialien haben die Dehnung des äußeren Mantels zu verwirklichen. Die vorgenannten Thermo-und Duroplaste können modifizierte Thermo- und Duroplaste sein. Epoxidharze und vorzugsweise durch Elastomere modifizierte Materialien können derart beschaffen sein, dass sie den Anforderungen hinsichtlich der Dehnbarkeit des äußeren Mantels entsprechen. Hierbei kann der äußere Mantel in allen Raumrichtungen durch kontinuierliche Änderung der Zusammensetzung an Harz, Härter, Füllstoffen und/oder Faserverstärkung modifiziert sein. Beispielhaft ist es auch möglich, eine Abstufung des Elastizitätsmoduls, auch E-Modul genannt, von der Innenseite 10 des äußeren Mantels 3 zur äußeren Oberfläche 11 des Mantels oder eine Veränderung des E-Moduls/Härter in den Randbereichen des äußeren Mantels 3 vorzusehen. Dies kann entweder nach dem Multilayer- Verfahren oder im kontinuierlichen Verfahren geschehen.

### a.) Multilayer- Verfahren:

Es werden sehr viele, sehr dünne Schichten nacheinander aufgetragen, wobei die Zusammensetzung der verwendeten oder neu hinzukommenden Materialien schichtweise verändert wird, beispielhaft ein von Bezugsinneren zum Bezugsäußere radial ansteigender Füllstoffgehalt und/oder unterschiedliche Harzkomponenten und/oder unterschiedliche Härterkomponenten. Beispiel 1:
Im Folgenden wird das an einem Epoxysystem gezeigt, das aus einem Bisphenol A Harz MW<700 bevorzugt Shell Epoxydharz Eponresin 828 und einem Härter bevorzugt ein aliphatisches oder aromatisches Diamin, beispielhaft Isophorondiamin besteht. Nach ausgeführter Vorgehensweise könnte man dann abwechselnd die beschriebenen Harzsysteme und/oder weitere Harzsysteme in die Mixturen einbringen.

### Beispiel 2:

Das Material besteht aus einem Polyurethan derart, dass auf ein Verstärkungsgrundgewebe, das in Maschenweite, Webart... variieren kann, eine Schichtabfolge aus unterschiedlichen Polyurethanen gegossen, durchaus mit weiteren Lagen an Verstärkungselementen (Füllstoffe, Fasern, Gewebe). Beispiel mit Huntsman Produkten: Verstärkungsgewebe mit Leinwandbindung, Harz 1= RFA1001, Härter 1= RFB 1080, Härter 2= RFB1070, Harz 2= RFA1000. Diese Elemente können nun derart vermischt werden, dass:
1.Lage: Harz 1 + Härter 1
2.Lage: Harz 1 + Härter 2
3. Lage Harz 2 + Härter 1

### b.) kontinuierliches Verfahren.

Die Änderung der Mischkomponenten, Harz-, Härter-, Füllstoffe-, Verstärkungsfasern während der Herstellung des Mantels z.B. beim horizontalen Gießen auf einen Wickeldorn oder beim vertikalen Gießen in einer Gießform.

### Beispiel:

Wechsel von Bisphenol A Epoxidharz Eponresin 828 Shell, auf Bisphenol F Harze Eponresin 862 Shell und/oder ein Wechsel von einem Diaminhärter beispielhaft Isophorondiamin, auch Härtergemische auf ein en BF₃ Katalysator, die dann das Epoxid-Basisharz aushärten. Aucvh der Wechsel von einfachen bifunktionellen Epoxidharzen zu tri- auch tetrafunktionellen Epoxidharzen, oder der Wechsel von Epoxy-Basisharzen auf andere Basisharze wie Polyurethanharze oder Phenolharze.

Durch geeignete Wahl der Härterkomponente ist es möglich, die Harzkomponente derart flexibel zu gestalten, dass die Dehnung des Mantels unterhalb der Bruchdehnung bleibt, so dass ein Brechen oder Reißen der äußeren Oberfläche 10 des Mantels ausgeschlossen ist. Eigenschaften des Mantels können durch geeignete Zuschlagstoffe weiter optimiert werden. So können im Außenbereich des Mantels Stoffe zum Einsatz kommen, die eine höhere Mohs-Härte aufweisen als das Matrix- oder Basismaterial, wodurch die Abriebbeständigkeit deutlich verbessert ist. Diese Stoffe mit Mohs-Härten > 7 sind beispielsweise SiC und Aluminiumoxid.

Die Größenverteilung der Füllstoffe ist unterschiedlich durchführbar und der Anwendung anzupassen. Für gewöhnliche Anwendungen kann SiC F400 gewählt werden. Es ist auch eine Modifikation mit Nanopartikeln möglich, welche weiter verstärkend und verschleißmindernd wirken, bevorzugt Nanopartikel (Nanotubes, Bucky Balls, Fullerene,...) gefüllte Harze oder Nanopartikel gefüllte Härter, besonders bevorzugt Nanopox ein Epoxy Basisharz mit Nanopartikel, auch Systeme die als besonders schwer löslich in organischen und anorganische Lösemitteln sind wie Ba₂SO₄ als Nanopartikel enthalten. Ferner kann zumindest die äußere Oberfläche 11 des Mantels thermisch und elektrisch leitende Materialien, wie Metallpulver, Flakes, Stapelfasern, aufweisen. Die gewünschte Erhöhung der Leitfähigkeit kann zur Vermeidung von elektrischen Entladungen auch durch Ruße und andere Pigmente herbeigeführt werden. Zur Vermeidung von Ablagerungen sind die Füllstoffe beispielsweise die vorgenannten Thermoplastfüllstoffe, vorzugsweise die vorgenannten Hochleistungsthermoplaste.

Zur Verbesserung der Festigkeit des äußeren Mantels 3 und zur Optimierung der Notlaufeigenschaften des Mantels können geeignete Verstärkungsfasern, Kurzfasern, Vliese, Gewebe, Gelege, Gestricke aus unterschiedlichen organischen Fasern, wie Polyester, Aramid, Carbon, anorganischen Fasern, wie Bor, Glas oder metallischen Fasern, vorgesehen sein. Es sind auch Kombinationen der vorgenannten Materialien möglich, so zum Beispiel metallisierte Vliese oder andere beschichtete Verstärkungsmaterialien.

Der äußere Mantel 3 ist vorzugsweise in der Mittel seiner Breite gegen ein axiales Verschieben, d.h. gegen ein Verschieben in Richtung des Doppelpfeils A, gesichert, beispielsweise am Stützelement 2 auf nicht näher gezeigte Art und Weise fixiert.

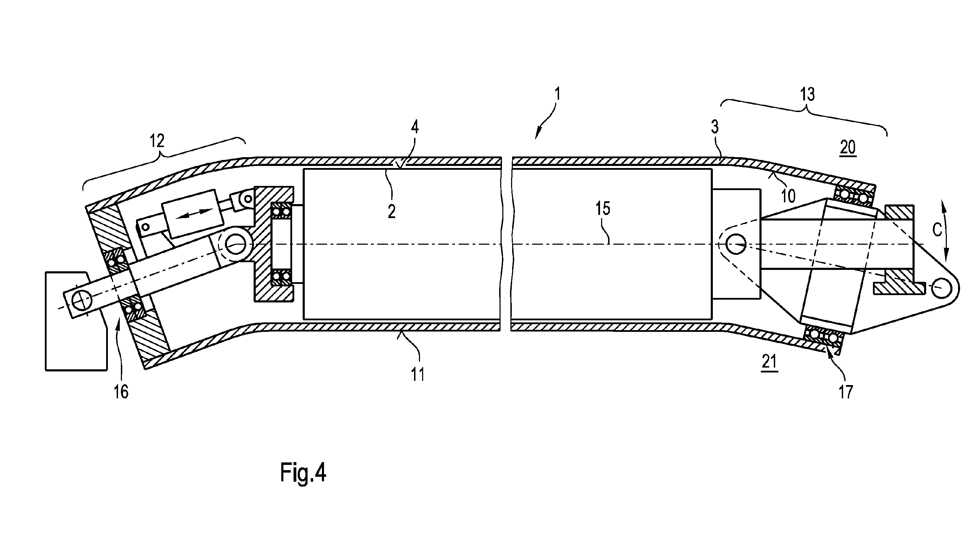

Wie in den Fig. 1 und 4 angedeutet, ist der äußere Mantel 3 an seinen Rändern 12 und 13 mit einer schräg stehenden Taumel- oder Kurvenscheibe 14 oder einem geneigten und zur Längsachse 15 des inneren Stützelementes 2 versetzten Lager 16, 17 verbunden. Letztere sind, wie in Fig. 4 angedeutet, in Richtung des Doppelpfeils C verstellbar, wodurch die Dehnung des äußeren Mantels 3 auf der Oberseite 20 und eine Kontraktion des Mantels auf der Unterseite 21 herbeiführbar und das jeweilige Maß einstellbar ist.

Der äußere Mantel 3 ist über das innere Stützelement 2 oder direkt vorzugsweise mittels eines Fluids 22 antreibbar. Ein Antrieb des äußeren Mantels über das Stützelement 2 ist beispielsweise in Fig. 1 gezeigt. Ein Antrieb des äußeren Mantels über ein Fluid 22 ist in Fig. 3 angedeutet, welches eine teilweise Seitenansicht auf die Walze 1, d.h. in Fig. 1 beispielsweise von rechts gesehen, im Schnitt verdeutlicht. Dazu kann beispielsweise das Stützelement 2 oder die damit verbundene Lagereinrichtung 5 mit düsenartigen Austrittsöffnungen 23 versehen sein, welche tangential zur Innenseite 10 des äußeren Mantels 3 verlaufen. Aus diesen Austrittsöffnungen 23 tritt das Fluid 22, beispielsweise eine Flüssigkeit oder ein Gas, aus. Vorzugsweise ist der äußere Mantel auf seiner Innenseite 10 mit sägezahnartigen Vorsprüngen 24 derart versehen, dass das Fluid beim Auftreffen auf den Vorsprung vorzugsweise zunächst auf eine senkrecht zur Strömungsrichtung des Fluids stehende Wand 25 trifft.

Es ist auch möglich, die Breitstreckwalze 1 überhaupt nicht anzutreiben sondern durch die Reibung der umlaufenden Papierbahn (nicht gezeigt) einfach mitlaufen zu lassen.

Bei der Lagerung des äußeren Mantels 3 auf den Kurvenscheiben gleitet oder rollt der Mantel entlang einer frei definierbaren Kurve, die unterschiedliche Steigungen aufweisen kann. Bei der Lagerung des Mantels auf in Fig. 1 gezeigten Taumelscheiben 14 haben diese ihr Schwenkzentrum auf oder in der Nähe der Rollachse des Mantels und des Stützelements bzw. der Längsachse 15 der Breitstreckwalze. Durch das Schwenken der Taumelscheibe in zwei Ebenen kann so nicht nur die Zunahme der Dehnung, sondern auch die Winkelposition der maximalen Auslenkung variiert werden.

Die geneigten und versetzten Lager 16, 17 gemäß der in Fig. 4 gezeigten Ausführungsform sind entweder starr, vorzugsweise jedoch verstellbar angeordnet. Dadurch wird die Lagerung des äußeren Mantels geneigt und das Zentrum der Lagerung aus der Rotationsachse, d.h. der Längsachse 15 der Walze, geschwenkt. Der äußere Mantel 3 wird dabei an den freien Mantelenden, d.h. an seinen Rändern 12 und 13, gebogen und über den Umfang unterschiedlich gedehnt.

Wie zuvor erwähnt, ist es auch möglich, piezoelektrische Fasern (nicht gezeigt) in den äußeren Mantel 3 einzubetten, welche dann als Aktuator oder als Sensor dienen. Solche piezoelektrische Fasern werden in den äußeren Mantel 3 eingearbeitet und verdrahtet. Durch ein winkelabhängiges Anlegen von Spannung an die Fasern können diese zur Kontraktion gebracht werden und somit die Dehnung des äußeren Mantels beeinflussen. Da piezoelektrische Fasern bei einer Kontraktion auch Stromimpulse abgeben können, ist es möglich, einige dieser Fasern auch als Sensoren zur Überwachung einer Dehnung bzw. Kontraktion des Mantels einzusetzen.

Ferner können, wie in Fig. 2 in einem schematischen Längsschnitt angedeutet, der äußere Mantel 3 und das Stützelement 2 bzw. die Lagereinrichtung 5 mit fix montierten oder variablen Anschlägen 26, 27 versehen sein. Dadurch ist es möglich, definierte Endanschläge zu setzen und/oder das Dehnungsverhalten des nachfolgenden Bereichs des äußeren Mantels zu beeinflussen. Die Kombination aus den Anschlägen 26 und 27, wie sie in Fig. 2 gezeigt ist, wäre also beispielsweise der linken Hälfte einer Breitstreckwalze 1 zuzuordnen, wie sie beispielhaft in Fig. 1 angedeutet ist. Diese Anschläge sind geeignet, um auf kurzen Teilstücken des Mantels hohe Dehnungen zu erzielen ohne die anderen Bereiche zu beeinflussen. z.B. Bei Rollenschneidern, wo einstellbare Anschläge die Dehnung der geschnittenen Bahn für die Einzelaufrollung auf einen sehr schmalen Bereich um die Schnittstelle begrenzen könnten.

Der äußere Mantel 3 und/oder das innere Stützelement 2 können beschichtet sein. Außerdem kann die äußere Oberfläche 11 des Mantels 3 in ihrer Oberflächenstrukturierung speziell ausgestaltet sein. Dadurch kann die Papierbahnführung in geeigneter Weise gesteuert werden und ein Aufschwimmen der Papierbahn auf den Mantel vermieden werden. Eine solche Oberflächenstrukturierung kann durch Rillen, Bohren, Fräsen sowohl in einzelner Ausführung als auch in unterschiedlichen Kombinationen von solchen Ausführungen oder durch gebohrte und gerillte Muster oder abgestufte Rillungen erfolgen, insbesondere ist auch das Anbringen von Oberflächenstrukturierungen erfindungsgemäß, die einen "Lotuseffekt" auslösen.

Auch eine Zufuhr bzw. Abfuhr eines Mediums (Ausblasen bzw. Absaugung) durch den entsprechend durchlässig gefertigten, äußeren Mantel ist vorstellbar, um z.B. die Dehnungsbedingungen oder andere Eigenschaften zu beeinflussen.

Das innere Stützelement 2 kann aus unterschiedlichen Materialien, vorzugsweise aus Faserverbundstoffen oder Metall oder Hybridkombinationen Metall Faserverbund bestehen. In beiden Fällen kann das innere Stützelement, wie zuvor erwähnt, zur Verbesserung der Laufeigenschaften beschichtet sein. Hierzu sind insbesondere Materialien und Stoffe geeignet, die die Lebensdauer des Innenmantels vorteilhaft beeinflussen:
- Die hierzu verwendeten Stoffe sind Elastomere, Thermoplaste und Duroplaste, vorzugsweise modifizierte Duroplaste, wie Cyanatesterharze, Phenolformaldehyd-Harze, bevorzugt Epoxidharze, die mit Füllstoffen, Faserverstärkungen hinsichtlich ihrer Beständigkeit optimierbar sind;
- Modifizieren der Rezepturen mit Hilfsmitteln, die eine Veränderung der Oberflächenspannung herbeiführen, z.B. Epoxy-modifizierte Siliconflüssigkeit, Polyalkenoxid-modifiziertes Polysiloxan, organomodifizierte Polysiloxanmischung, acryliertes Siloxan/Polyalkenoxid-Copolymer;
- Modifizieren der Oberfläche mit Hilfsmitteln, die eine Verringerung der Reibung bzw. des Verschleißes bewirken, z.B. Polyethylen (PE), insbesondere auch UHMPE, PP, PVDF, PVF, PTFE, PEEK und andere thermoplastische Füllstoffe;
- Einstellen der Leitfähigkeit durch leitfähigkeitserhöhende Füllstoffe, wie Graphit, Ruß, Metallpigmente (Fasern, Flakes, Pulver) oder metallisierte Füllstoffe;
- Modifizieren der Gießmassen mit Füllstoffen, die zur Ausprägung einer antiabrasiven Schicht dienen, z.B. Carbide, Metalle und deren Oxide, z.B. Chrom, Eisen, Aluminium;
- Modifizieren der Gießmasse mit Füllstoffen in der Größe von Nanopartikeln bis zum Milllimeterbereich mit enger Verteilung der Korngrößen, d.h. einer Korngrößenordnung wie Nanopartikel oder größer, also von Partikelgrößen vom Nano- bis zum Millimeterbereich;
- Modifizieren mit fasrigen Füllstoffen und/oder Fasern, z.B. Glas, Carbon, Kevlar.

Die Lagerung des äußeren Mantels 3 erfolgt üblicherweise beidseitig am Ende des Mantels mittels Kugel- oder Rollenlagerung oder Gleitlagerung am Betätigungsmechanismus. Die Lagerung des äußeren Mantels am inneren Stützelement kann ebenfalls mit durch Kugel- oder Rollenlagerung oder vorzugsweise durch Gleitlagerung mittels Trockenschmierung oder statisch bzw. dynamisch durch ein Schmier- oder Gleitmedium, wie z.B. Ölschmierung, Wasserschmierung, Luftlagerung bzw. Magnetfeld, erfolgen.

Die Lagerung des inneren Stützelements kann so erfolgen, dass dieses nicht rotierend mit dem Maschinenrahmen verbunden ist. In diesem Fall gleitet der äußere Mantel axial über das innere Stützelement und rotiert um dieses. Es ist aber auch möglich, das innere Stützelement beidseitig über Kugel-, Rollen- oder Gleitlager drehbar mit dem Maschinenrahmen zu verbinden. In diesem Fall gleitet der äußere Mantel axial auf dem inneren Stützelement und hat keine oder nur eine geringe relative Rotationsbewegung zum inneren Stützelement.

Ein geeignetes Material für den äußeren Mantel 3 ist beispielsweise Polyurethan, das auch über eine entsprechende Oberflächenhärte und Verschleißfestigkeit verfügt. Die Eigenschaften des Materials können auch durch Wahl und Anordnung der einzelnen, das Material bildenden Komponenten über die Breite des Mantels veränderlich gestaltet sein, so dass das Dehnungsverhalten abschnittsweise beeinflussbar ist. Eine typische Anwendung ist beispielsweise eine Breitstreckwalze an einem Rollenschneider, welche in diesem Fall eine starke Manteldehnung nur im Bereich der Rollenschnitte hat.

Wie zuvor erwähnt, kann der Antrieb der Breitstreckwalze entweder indirekt über das innere Stützelement oder über diverse Mitnehmer bzw. Vorsprünge 24 am äußeren Mantel erfolgen. Bei Verwendung einer hydrostatischen Lagerung, Luftlagerung oder dergleichen kann das Fluid auch zum Antrieb der Breitstreckwalze verwendet werden, indem durch gezieltes Zuführen des Fluids und durch konstruktive Maßnahmen ein Rotationsmoment hervorgerufen wird. Dieser Fall wurde zuvor anhand der Fig. 3 erläutert.

Ferner können auf der äußeren Oberfläche des Stützelementes Gleitführungen oder Gleitbeschichtungen vorgesehen sein, damit der äußere Mantel auf dem Stützelement gleiten und gegebenenfalls roten kann. Bei hydrostatischer oder hydrodynamischer Lagerung des äußeren Mantels oder einer Lagerung mittels Luft können sogenannte Schmiertaschen oder Schmierkanäle an der äußeren Oberfläche des Stützelementes vorgesehen sein. Wie zuvor erwähnt, ist es durch die Verwendung unterschiedlicher Materialzusammensetzungen bzw. durch die Wahl der Dicke bzw. Wandstärke des äußeren Mantels möglich, unterschiedliche Dehnverhalten des Mantels über die Bahnbreite zu realisieren. Um die Dehnung zu begrenzen, können auch diverse Anschläge am inneren Stützelement oder am äußeren Mantel vorgesehen sein.

Bei der erfindungsgemäßen Breitstreckwalze erfolgt keine starke Änderung des Papierbahnzuges. Dadurch ist die Gefahr eines Haftungsverlustes der Papierbahn verringert. Die Streckung der Papierbahn kann gleichmäßig linear von der Mitte der Papierbahn bis zum Rand hin erfolgen, wodurch eine maximale Breitstreckwirkung erzielbar ist. Durch einen bereichsweise unterschiedlichen Aufbau des äußeren Mantels können auch Teilsegmente gedehnt werden. Die eingebrachten Kräfte zum Dehnen des äußeren Mantels werden innerhalb der Walze abgefangen und belasten nicht den Maschinenrahmen.

Damit ist eine Breitstreckwalze geschaffen, deren Breitstreckwirkung verbessert ist.

## Patentansprüche

1. Breitstreckwalze, mit einem inneren, vorzugsweise geraden Stützelement (2) und einem äußeren, drehbaren Mantel (3), welcher in Richtung seiner Breite elastisch dehnbar ist, wobei das Stützelement (2) auf seiner zum Mantel (3) gerichteten Außenseite (4) eine Lagereinrichtung (5) zum radialen Abstützen des äußeren Mantels (3) aufweist,
**dadurch gekennzeichnet, dass**
die Lagereinrichtung (5) in radialer Richtung der Walze (1) steif ausgebildet ist.

2. Breitstreckwalze nach Anspruch 1, **dadurch gekennzeichnet, dass** die Lagereinrichtung (5) eine statische oder dynamische Gleitlagerung oder eine Kugel- oder Rollenlagerung (6) aufweist.

3. Breitstreckwalze nach Anspruch 1 oder 2, **dadurch gekennzeichnet, dass** der äußere Mantel (3) in radialer Richtung und das innere Stützelement (2) vorzugsweise in axialer und radialer Richtung steif ausgebildet sind.

4. Breitstreckwalze nach einem der vorhergehenden Ansprüche, **dadurch gekennzeichnet, dass** das Dehnverhalten des äußeren Mantels (3) durch die Wahl seiner Dicke bzw seines Dickenverlaufes entlang der Bahnbreite und/oder das Vorsehen, vorzugsweise Orientieren, eines oder mehrerer Materialien, wie Harze, bevorzugt Elastomere, besonders bevorzugt Polyurethan, oder Thermo-, Duroplaste; Härter; Füllstoffe, bevorzugt Siliciumcarbid (SiC), Aluminiumoxid, Thermoplastfüllstoffe, Polypropylen, Nylon, Polyethylen (allgemein Gebrauchsthermoplaste) Polyetheretherketon (PEEK), Polyvinylidenfluorid (PVDF), Polyvinylfluorid (PVF), Polytetrafluorethylen (PTFE), Polyester (PES), Polyphenylsiloxan (PPS); Verstärkungsfasern aus organischen Fasern, bevorzugt Polyester, Aramid, Carbon, oder anorganischen Fasern, bevorzugt Bor, Glas, metallische Fasern; piezoelektrische Fasern, einstellbar ist.

5. Breitstreckwalze nach einem der vorhergehenden Ansprüche, **dadurch gekennzeichnet, dass** der äußere Mantel (3) vorzugsweise in der Mitte seiner Breite gegen ein axiales Verschieben gesichert ist.

6. Breitstreckwalze nach einem der vorhergehenden Ansprüche, **dadurch gekennzeichnet, dass** der äußere Mantel (3) an seinen Rändern (12, 13) mit einer Taumel- oder Kurvenscheibe (14) oder einem geneigten und zur Längsachse (15) des inneren Stützelements (2) versetzten Lager (16, 17) verbunden ist.

7. Breitstreckwalze nach einem der vorhergehenden Ansprüche, **dadurch gekennzeichnet, dass** der äußere Mantel (3) über das innere Stützelement (2) oder direkt vorzugsweise mittels eines Fluids (22) antreibbar ist.

8. Breitstreckwalze nach einem der vorhergehenden Ansprüche, **dadurch gekennzeichnet, dass** der äußere Mantel (3) und/oder das innere Stützelement (2) beschichtet sind.

9. Breitstreckwalze nach einem der vorhergehenden Ansprüche, **dadurch gekennzeichnet, dass** der äußere Mantel (3) Oberflächenstrukturierungen wie bspw. Rillen, Bohrungen oder Fräsungen umfasst.

10. Breitstreckwalze nach einem der vorhergehenden Ansprüche, **dadurch gekennzeichnet, dass** Mittel zur Zu- und / oder Abfuhr eines Mediums durch den entsprechend durchlässig gefertigten, äußeren Mantel (3) zur Beeinflussung der Dehnung des äußeren Mantels (3) vorgesehen sind.

11. Breitstreckwalze nach einem der vorhergehenden Ansprüche, **dadurch gekennzeichnet, dass** der äußere Mantel (3) in radialer Richtung zumindest abschnittweise fest und in axialer Richtung zumindest abschnittweise beweglich mit dem inneren Stützelement (2)verbunden ist.
